# EUROPÄISCHE PATENTANMELDUNG

(11) **EP 3 758 338 A1**
(43) Veröffentlichungstag der Anmeldung: **30.12.2020**
(21) Anmeldenummer: 19183299.7
(22) Anmeldetag: 28.06.2019
(51) Int. Cl.: H04L 29/12

(54) **VERFAHREN ZUR KONFIGURATION VON KOMMUNIKATIONSGERÄTEN, KONFIGURATIONSDATENVERTEILEREINHEIT UND KONFIGURATIONSSERVER**

(71) Anmelder: Siemens Aktiengesellschaft, 80333 München (DE)
(72) Erfinder: Albrecht, Harald, 90475 Nürnberg (DE); Höme, Stephan, 91126 Schwabach (DE); Jung, Konstantin, 90537 Feucht (DE); Talanis, Thomas, 91336 Heroldsbach (DE)

(57) **Zusammenfassung**

Zur Konfiguration von Kommunikationsgeräten ist zumindest eine Konfigurationsdatenverteilereinheit (102) vorgesehen, die mittels einer ersten Konfigurationsanforderung (301) eine Freigabe eines Teilnetz-spezifischen IPv6-Präfix (303) von einem Konfigurationsserver (101) anfordert und aus einem freigegebenen Teilnetz-spezifischen IPv6-Präfix eine Teilnetz-Kennung (124) erzeugt. Während erste Kommunikationsgeräte (104) selbständig eine IPv6-Adresse erzeugen, fordern zweite Kommunikationsgeräte (105) mittels einer zweiten Konfigurationsanforderung (302) jeweils eine Bereitstellung einer IPv6-Adresskonfiguration an. Die Konfigurationsdatenverteilereinheit (102) leitet die zweiten Konfigurationsanforderungen (302, 302') der zweiten Kommunikationsgeräte (105) jeweils unter Einfügung der Teilnetz-Kennung (124) an den Konfigurationsserver (101) weiter. Der Konfigurationsserver (101) stellt anhand der Teilnetz-Kennung (124) auf die zweiten Konfigurationsanforderungen (302, 302') jeweils eine IPv6-Adresskonfiguration (304) mit einer IPv6-Adresse aus einem Teilnetz-spezifischen Adressbereich (307) an die zweiten Kommunikationsgeräte (105) bereit.

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Aus EP 2 940 926 B1 ist bekannt, dass eine Konfigurationseinheit eines Kommunikationsgeräts zur Konfiguration des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen.

In EP 2 975 827 A1 ist beschrieben, dass zur Konfiguration von Kommunikationsgeräten erste Konfigurationsinformationen für die Kommunikationsgeräte mittels Routerbekanntgabe-Nachrichten durch zumindest einen Router innerhalb eines Teilnetzes an vom jeweiligen Teilnetz umfasste Kommunikationsgeräte übermittelt werden. Die ersten Konfigurationsinformationen umfassen Steuerungsinformationen mit Angaben über zweite Konfigurationsinformationen, die durch zumindest einen Konfigurationsserver bereitgestellt werden. Mittels Kommunikationsgeräte- oder Router-seitiger Diagnoseeinheiten wird überprüft, ob die ersten Konfigurationsinformationen innerhalb des jeweiligen Teilnetzes zueinander konsistente Steuerungsinformationen umfassen. Bei einem Vorliegen inkonsistenter Steuerungsinformationen werden die Kommunikationsgeräte entsprechend ersten Konfigurationsinformationen konfiguriert, die durch zumindest einen vor Vorliegen der inkonsistenten Steuerungsinformationen für eine Konfiguration maßgeblichen Router übermittelt werden.

Aus dem IETF-Standard-Entwurf RFC 3315 (https://tools.ietf. org/html/rfc3315) ist bekannt, dass entsprechend Dynamic Host Configuration Protocol for IPv6 (DHCPv6) DHCP-Servers Konfigurationsparameter, wie IPv6-Adressen, zur Auswahl und Anforderung an Netzknoten übermitteln. Insbesondere ermöglicht DHCPv6 eine automatische Allokierung wiederbenutzbarer IPv6-Adressen und - im Gegensatz zur einer Stateless Adress Autoconfiguration - eine zustandsbezogene Protokollierung momentan durch Netzknoten genutzter IPv6-Adressen.

Im IETF-Standard-Entwurf RFC 3633 (https://tools.ietf.org/ html/rfc3633) ist ein Verfahren zur Delegation einer Verbreitung von IPv6-Präfixen auf Basis von DHCPv6 beschrieben. Dabei werden IPv6-Präfixe auf Anforderung durch einen delegierenden Router bzw. DHCP-Server zur Verbreitung durch einen anfordernden Router freigegeben. Dies kann insbesondere über administrative Grenzen hinweg erfolgen, ohne dass der delegierenden Router bzw. DHCP-Server über Topologie-Informationen eines Teilnetzes verfügen muss, in dem freigegebene IPv6-Präfixe durch den anfordernden Router verbreitet werden.

EP 3 242 466 B1 betrifft eine Konfigurationsdatenverteilereinheit, die bei Empfang einer Adresskonfigurationsanforderung eines ersten Kommunikationsgeräts industriellen Automatisierungssystems eine Zuordnung mit vorgebbarer Gültigkeitsdauer zwischen dem ersten Kommunikationsgerät und einem Adresskonfigurationsserver speichert und anhand der gespeicherten Zuordnung während der Gültigkeitsdauer sämtliche Konfigurationsanforderungen des ersten Kommunikationsgeräts an den Adresskonfigurationsserver weiterleitet. Dagegen speichert die Konfigurationsdatenverteilereinheit bei Empfang einer Präfixdelegationsanforderung eines zweiten Kommunikationsgeräts mit Routerfunktion eine Zuordnung mit vorgebbarer Gültigkeitsdauer zwischen dem zweiten Kommunikationsgerät und eine Präfixkonfigurationsserver und leitet anhand der gespeicherten Zuordnung während der Gültigkeitsdauer sämtliche Konfigurationsanforderungen des zweiten Kommunikationsgeräts an den Präfixkonfigurationsserver weiter.

Der vorliegenden Erfindung liegt die Aufgabe zugrunde, ein Verfahren zur Konfiguration unterschiedlicher Kommunikationsgeräte, die entweder durch eine andere Instanz bereitgestellte Konfigurationsdaten benötigen oder sich im Wesentlichen selbständig konfigurieren, innerhalb eines Kommunikationsnetzes zur Übermittlung zeitkritischer Daten anzugeben sowie geeignete Vorrichtungen zur Durchführung des Verfahrens zu schaffen.

Diese Aufgabe wird erfindungsgemäß durch ein Verfahren mit den in Anspruch 1 angegebenen Merkmalen, durch eine Konfigurationsdatenverteilereinheit mit den in Anspruch 11 angegebenen Merkmalen und durch einen Konfigurationsserver mit den in Anspruch 12 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Konfiguration von Kommunikationsgeräten gibt ein Konfigurationsserver auf erste Konfigurationsanforderungen jeweils zumindest ein mittels Routeranzeige-Nachrichten verbreitbares IPv6-Präfix (Internet Protocol, Version 6) für ein zu konfigurierendes Kommunikationsgerät mit Routerfunktionen frei. Darüber hinaus stellt der Konfigurationsserver auf zweite Konfigurationsanforderungen jeweils eine IPv6-Adresskonfiguration an ein zu konfigurierendes Kommunikationsgerät bereit. Die ersten Konfigurationsanforderungen können insbesondere DHCPv6-Konfigurationsanforderungen mit IA_PD-Option für eine Präfix-Delegation sein, während die zweiten Konfigurationsanforderungen beispielsweise DHCPv6-Konfigurationsanforderungen mit IA_NA-Option zur Bereitstellung einer nicht-temporären IPv6-Adresse oder mit IA_TA-Option zur Bereitstellung einer temporären IPv6-Adresse sind. Vorzugsweise ist der Konfigurationsserver ein DHCPv6-Server, der Informationen über an Kommunikationsgeräte vergebene IPv6-Adresskonfigurationen für eine Verwaltung von IPv6-Adresskonfigurationen speichert.

Erfindungsgemäß fordert zumindest eine Konfigurationsdatenverteilereinheit, die einem Teilnetz zugeordnet ist und Routerfunktionen umfasst, mittels einer ersten Konfigurationsanforderung eine Freigabe eines Teilnetz-spezifischen IPv6-Präfix vom Konfigurationsserver an und erzeugt aus einem freigegebenen Teilnetz-spezifischen IPv6-Präfix eine Teilnetz-Kennung. Die Konfigurationsdatenverteilereinheit verbreitet im zugeordneten Teilnetz Routeranzeige-Nachrichten (Router Advertisements) mit dem freigegebenen Teilnetz-spezifischen IPv6-Präfix. Während erste Kommunikationsgeräte anhand des durch die Konfigurationsdatenverteilereinheit verbreiteten IPv6-Präfix und anhand eines jeweiligen Schnittstellen-Identifikators jeweils für sich selbständig eine IPv6-Adresse erzeugen, fordern zweite Kommunikationsgeräte mittels einer zweiten Konfigurationsanforderung jeweils eine Bereitstellung einer IPv6-Adresskonfiguration für sich an.

Die Konfigurationsdatenverteilereinheit leitet die zweiten Konfigurationsanforderungen der zweiten Kommunikationsgeräte erfindungsgemäß jeweils unter Einfügung der Teilnetz-Kennung an den Konfigurationsserver weiter. Anhand der Teilnetz-Kennung stellt der Konfigurationsserver auf die zweiten Konfigurationsanforderungen jeweils eine IPv6-Adresskonfiguration mit einer IPv6-Adresse aus einem Teilnetz-spezifischen Adressbereich an die zweiten Kommunikationsgeräte bereit. Vorzugsweise umfasst der Konfigurationsserver eine Auswerteeinheit, die jeweils anhand der Teilnetz-Kennung einen zulässigen Adressbereich für den Konfigurationsserver zur Bereitstellung der jeweiligen IPv6-Adresskonfiguration auswählt.

Die vorliegende Erfindung ermöglicht insbesondere eine automatische integrierte Verwaltung von Subnetzen, in denen Stateless Address Autoconfiguration (SLAAC), NAT64 oder DHCPv6 mit IA_NA-Option jeweils für sich oder in gemischter Nutzung angewendet werden. Hierfür sind keine Änderungen bestehender IPv6-Standards erforderlich. Darüber hinaus können aufgrund der integrierten Verwaltung heterogener IT/OT-Netze (Information Technology/Operational Technology) auf einfache Weise Geräte getauscht sowie Netz-Erweiterungen oder -Umbauten durchgeführt werden.

Entsprechend einer bevorzugten Ausgestaltung der vorliegenden Erfindung ordnet eine Konfigurationssteuerungseinheit dem Konfigurationsserver einen ausgewählten IPv6-Adressbereich bzw. ausgewählte IPv6-Präfixe zur Zuteilung an zu konfigurierende Kommunikationsgeräte zu. Vorteilhafterweise umfasst die Konfigurationsteuerungseinheit einen DHCPv6-Client zur Abfrage von IPv6-Adressbereichen bzw. IPv6-Präfixen von einem übergeordneten DHCPv6-Server umfasst. Auf diese Weise lässt sich die vorliegende Erfindung auch in bereits bestehende Kommunikationsnetze integrieren.

Vorzugsweise fordert die Konfigurationsdatenverteilereinheit bei ihrer Inbetriebnahme die Freigabe des Teilnetz-spezifischen IPv6-Präfix vom Konfigurationsserver an, so dass stets eine konsistente Behandlung von Konfigurationsdaten gewährleistet ist. Entsprechend einer weiteren vorteilhaften Ausgestaltung der vorliegenden Erfindung übermittelt die Konfigurationsdatenverteilereinheit die Teilnetz-Kennung für die zweiten Konfigurationsanforderungen der zweiten Kommunikationsgeräte jeweils mittels OPTION_SUBSCRIBER_ID entsprechend IETF RFC 4580 an den Konfigurationsserver. Damit kann die vorliegende Erfindung im Einklang mit bestehenden IPv6-Standards implementiert werden. Zur Sicherstellung einer reibungslosen betrieblichen Koexistenz von Stateless Address Autoconfiguration (SLAAC) und DHCPv6 mit IA_NA-Option verbreitet die Konfigurationsdatenverteilereinheit die Routeranzeige-Nachrichten im zugeordneten Teilnetz mit aktivierter On-link-Option und mit deaktivierter Autoconfiguration-Option entsprechend IETF RFC 4861.

Die erfindungsgemäße Konfigurationsdatenverteilereinheit ist zur Durchführung eines Verfahrens entsprechend vorangehenden Ausführungen vorgesehen und umfasst Routerfunktionen. Die Konfigurationsdatenverteilereinheit ist dafür ausgestaltet und eingerichtet, mittels einer ersten Konfigurationsanforderung eine Freigabe eines Teilnetz-spezifischen IPv6-Präfix von einem Konfigurationsserver anzufordern und aus einem freigegebenen Teilnetz-spezifischen IPv6-Präfix eine Teilnetz-Kennung zu erzeugen. Außerdem ist die Konfigurationsdatenverteilereinheit ist dafür ausgestaltet und eingerichtet, in einem zugeordneten Teilnetz Routeranzeige-Nachrichten mit dem freigegebenen Teilnetz-spezifischen IPv6-Präfix zu verbreiten und zweite Konfigurationsanforderungen zur Bereitstellung jeweils einer IPv6-Adresskonfiguration von anfordernden Kommunikationsgeräten jeweils unter Einfügung der Teilnetz-Kennung an den Konfigurationsserver weiterzuleiten.

Der erfindungsgemäße Konfigurationsserver ist zur Durchführung eines Verfahrens entsprechend vorangehenden Ausführungen vorgesehen und dafür ausgestaltet und eingerichtet, auf erste Konfigurationsanforderungen jeweils zumindest ein mittels Routeranzeige-Nachrichten verbreitbares IPv6-Präfix für ein zu konfigurierendes Kommunikationsgerät mit Routerfunktionen freizugeben. Darüber hinaus ist der Konfigurationsserver dafür ausgestaltet und eingerichtet, auf zweite Konfigurationsanforderungen jeweils eine IPv6-Adresskonfiguration an ein zu konfigurierendes Kommunikationsgerät bereitzustellen. Des Weiteren ist der Konfigurationsserver dafür ausgestaltet und eingerichtet, anhand von in die zweiten Konfigurationsanforderungen eingefügten Teilnetz-Kennungen auf die zweiten Konfigurationsanforderungen jeweils eine IPv6-Adresskonfiguration mit einer IPv6-Adresse aus einem Teilnetz-spezifischen Adressbereich an die zu konfigurierenden Kommunikationsgeräte bereitzustellen.

Die vorliegende Erfindung wird nachfolgend an einem Ausführungsbeispiel anhand der Zeichnung näher erläutert. Es zeigt
- Figur 1: eine schematische Darstellung eines Kommunikations-systems mit einem DHCPv6-Server, mehreren jeweils einem Teilnetz zugeordneten DHCPv6-Relays und mehreren zu konfigurierenden Kommunikationsgeräten,
- Figur 2: den DHCPv6-Server entsprechend Figur 1 mit einer Konfigurationssteuerungseinheit und einem übergeordneten DHCPv6-Server.

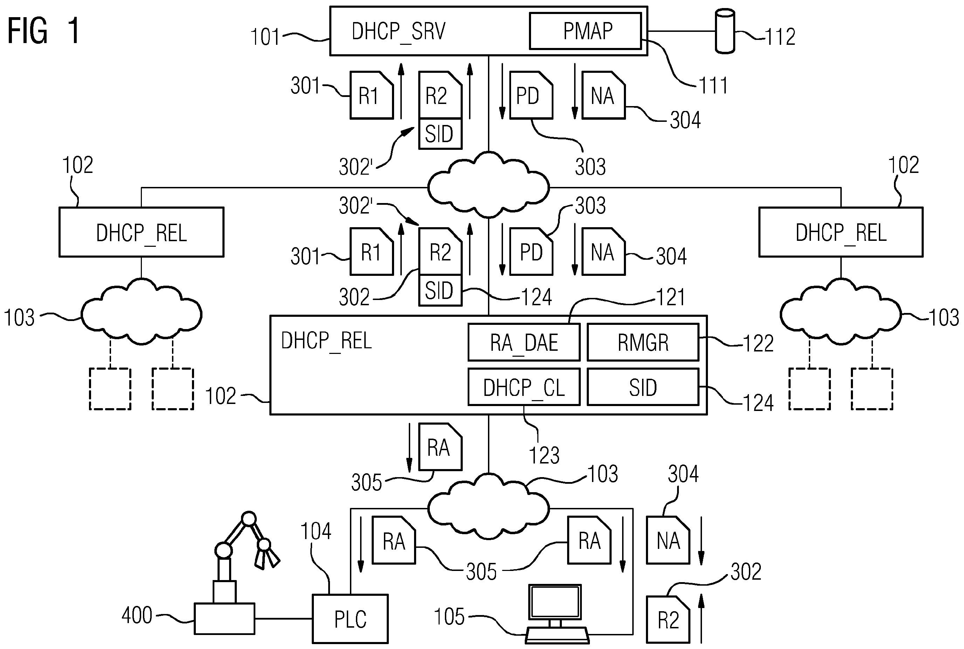

Das in Figur 1 dargestellte Kommunikationssystem umfasst einen DHCPv6-Server 101 als Konfigurationsserver, mehrere DHCPv6-Relays 102 mit Routerfunktion sowie mehrere Kommunikations- bzw. Automatisierungsgeräte 104-105. Das Automatisierungsgerät 104 ist im vorliegenden Ausführungsbeispiel eine speicherprogrammierbare Steuerung für eine Maschine 400 oder Vorrichtung und umfasst ein Kommunikationsmodul mit Adress-Autokonfiguration, eine Zentraleinheit sowie eine Eingabe/ Ausgabe-Einheit. Die Eingabe/Ausgabe-Einheit dient einem Austausch von Steuerungs- und Messgrößen zwischen dem Automatisierungsgerät 104 und der durch das Automatisierungsgerät 104 gesteuerten Maschine 400 oder Vorrichtung. Die Zentraleinheit ist insbesondere für eine Ermittlung geeigneter Steuerungsgrößen aus erfassten Messgrößen vorgesehen. Obige Komponenten des Automatisierungsgeräts 104 sind im vorliegenden Ausführungsbeispiel über ein Rückwandbus-System miteinander verbunden.

Im vorliegenden Ausführungsbeispiel ist das Automatisierungsgerät 105 eine Bedien- und Beobachtungsstation und umfasst einen DHCPv6-Client. Das Automatisierungsgerät 105 dient zur Visualisierung von Prozessdaten bzw. Mess- und Steuerungsgrößen, die durch das Automatisierungsgerät 104 oder andere Automatisierungsgeräte verarbeitet bzw. erfasst werden. Insbesondere wird das Automatisierungsgerät 105 zur Anzeige von Werten eines Regelungskreises und zur Veränderung von Regelungsparametern oder -programmen verwendet. Das Automatisierungsgerät 105 kann beispielsweise mittels eines PC und eines weit verbreiteten Betriebssystems für Büro-Anwendungen, das IPv6-Unterstützung aufweist, realisiert sein.

Der DHCPv6-Server 101 gibt auf erste Konfigurationsanforderungen 301 jeweils zumindest ein mittels Router Advertisements 305 verbreitbares IPv6-Präfix 303 für ein zu konfigurierendes Kommunikationsgerät mit Routerfunktionen frei. Solche Kommunikationsgeräte mit Routerfunktion sind beispielsweise die DHCPv6-Relays 102. Die ersten Konfigurationsanforderungen 301 sind insbesondere DHCPv6-Konfigurationsanforderungen mit IA_PD-Option für eine Präfix-Delegation.

Außerdem stellt der DHCPv6-Server 101 auf zweite Konfigurationsanforderungen 302 bzw. 302' jeweils eine IPv6-Adresskonfiguration 304 an ein zu konfigurierendes Kommunikationsgerät bereit. Ein solches zu konfigurierendes Kommunikationsgerät ist beispielsweise das Automatisierungsgerät 105 mit DHCPv6-Client. Die zweiten Konfigurationsanforderungen 302 bzw. 302' sind beispielsweise DHCPv6-Konfigurationsanforderungen mit IA_NA-Option zur Bereitstellung einer nicht-temporären IPv6-Adresse oder mit IA_TA-Option zur Bereitstellung einer temporären IPv6-Adresse. Darüber hinaus speichert der DHCPv6-Server 101 im Rahmen einer Stateful Address Configuration Informationen über an Kommunikationsgeräte vergebene IPv6-Adresskonfigurationen in einer Datenbank 112 für eine Verwaltung von IPv6-Adresskonfigurationen.

Die DHCPv6-Relays 102 sind jeweils auf Basis eines DHCPv6-Clients 123 dafür ausgestaltet und eingerichtet, mittels einer ersten Konfigurationsanforderung 301 eine Freigabe eines Teilnetz-spezifischen IPv6-Präfix 303 vom DHCPv6-Server 101 anzufordern und aus einem freigegebenen Teilnetz-spezifischen IPv6-Präfix 303 eine Teilnetz-Kennung 124 zu erzeugen. Ihre jeweilige Teilnetz-Kennung 124 speichern die DHCPv6-Relays 102 vorzugsweise jeweils einem reservierten Speicherbereich ab. Des Weiteren umfassen die DHCPv6-Relays 102 jeweils einen Router Advertisement Daemon 121 und verbreiten durch diesen im jeweiligen zugeordneten Teilnetz 103 Router Advertisements 305 mit dem freigegebenen Teilnetz-spezifischen IPv6-Präfix 303. Vorteilhafterweise fordern die DHCPv6-Relays 102 bei ihrer Inbetriebnahme mittels eines jeweiligen Relay Managers 122 die Freigabe des jeweiligen Teilnetz-spezifischen IPv6-Präfix 303 vom DHCPv6-Server 101 an und verbreiten die Router Advertisements 305 im zugeordneten Teilnetz 103 mit aktivierter On-link-Option sowie mit deaktivierter Autoconfiguration-Option entsprechend IETF RFC 4861.

Im vorliegenden Ausführungsbeispiel steht das Automatisierungsgerät 104 stellvertretend für erste Kommunikationsgeräte, die anhand des per Router Advertisment 305 durch das jeweilige DHCPv6-Relay 102 verbreiteten bzw. durch einen Router verbreiteten IPv6-Präfix 303 und anhand eines jeweiligen Schnittstellen-Identifikators jeweils für sich selbständig eine IPv6-Adresse erzeugen. Diese selbständige Adresserzeugung erfolgt insbesondere entsprechend Stateless Address Autoconfiguration (SLAAC). Das Automatisierungsgerät 105 repräsentiert allgemein zweite Kommunikationsgeräte, die mittels einer zweiten Konfigurationsanforderung 302 jeweils eine Bereitstellung einer IPv6-Adresskonfiguration für sich anfordern.

Die DHCPv6-Relays 102 sind darüber hinaus dafür konfiguriert, die zweiten Konfigurationsanforderungen 302 bzw. 302' der zweiten Kommunikationsgeräte jeweils unter Einfügung der Teilnetz-Kennung 124 an den DHCPv6-Server 101 weiterzuleiten. Die sind die Konfigurationsanforderungen 302 die ursprünglichen Konfigurationsanforderungen der zweiten Kommunikationsgeräte, während die Konfigurationsanforderungen 302' zusätzlich jeweils die eingefügte Teilnetz-Kennung 124 umfassen. Vorzugsweise übermitteln die DHCPv6-Relays die Teilnetz-Kennungen 124 für die zweiten Konfigurationsanforderungen 302 bzw. 302' der zweiten Kommunikationsgeräte jeweils mittels OPTION_SUBSCRIBER_ID entsprechend IETF RFC 4580 an den DHCPv6-Server 101.

Der DHCPv6-Server 101 stellt anhand der Teilnetz-Kennung 124 auf die zweiten Konfigurationsanforderungen 302 bzw. 302' jeweils eine IPv6-Adresskonfiguration 304 mit einer IPv6-Adresse aus einem Teilnetz-spezifischen Adressbereich 307 an das jeweilige zweite Kommunikationsgerät, beispielsweise das Automatisierungsgerät 105, bereit. Im vorliegenden Ausführungsbeispiel umfasst der DHCPv6-Server 101 eine Auswerteeinheit 111, die jeweils anhand der Teilnetz-Kennung 124 einen zulässigen Adressbereich für den DHCPv6-Server 101 zur Bereitstellung der jeweiligen IPv6-Adresskonfiguration 304 auswählt.

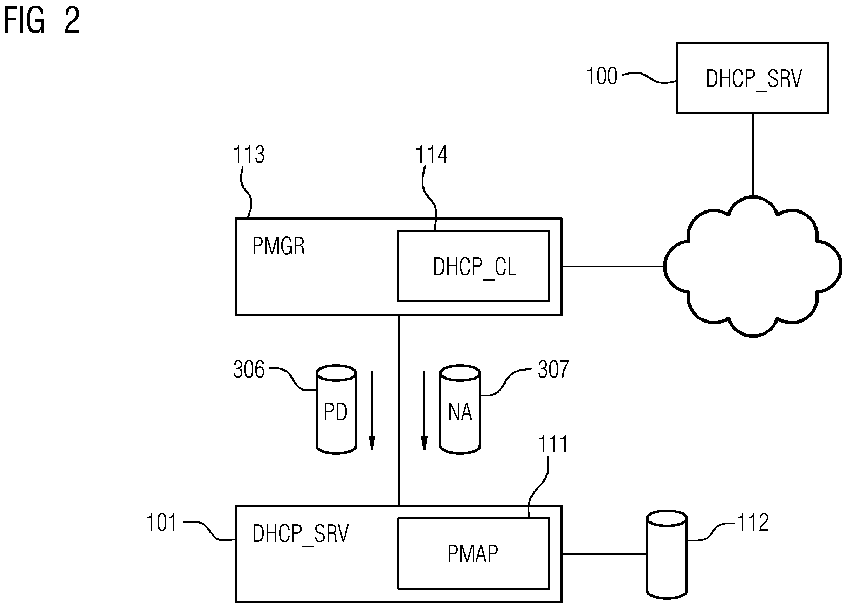

Entsprechend Figur 2 ist eine Konfigurationssteuerungseinheit 113 für den DHCPv6-Server 101 vorgesehen, die dem DHCPv6-Server 101 ausgewählte IPv6-Präfixe 306 bzw. einen ausgewählten IPv6-Adressbereich 307 zur Zuteilung an zu konfigurierende Kommunikationsgeräte zuordnet. Darüber hinaus kann die Konfigurationsteuerungseinheit 113 einen DHCPv6-Client 114 zur Abfrage von IPv6-Präfixen bzw. IPv6-Adressbereichen von einem übergeordneten DHCPv6-Server 100 umfassen.

## Patentansprüche

1. Verfahren zur Konfiguration von Kommunikationsgeräten innerhalb eines Kommunikationsnetzes zur Übermittlung zeitkritischer Daten, bei dem
- ein Konfigurationsserver (101) auf erste Konfigurationsanforderungen (301) jeweils zumindest ein mittels Routeranzeige-Nachrichten (305) verbreitbares IPv6-Präfix (303) für ein zu konfigurierendes Kommunikationsgerät mit Routerfunktionen freigibt,
- der Konfigurationsserver (101) auf zweite Konfigurationsanforderungen (302, 302') jeweils eine IPv6-Adresskonfiguration (304) an ein zu konfigurierendes Kommunikationsgerät bereitstellt,
- zumindest eine Konfigurationsdatenverteilereinheit (102), die einem Teilnetz (103) zugeordnet ist und Routerfunktionen umfasst, mittels einer ersten Konfigurationsanforderung (301) eine Freigabe eines Teilnetz-spezifischen IPv6-Präfix (303) vom Konfigurationsserver (101) anfordert und aus einem freigegebenen Teilnetz-spezifischen IPv6-Präfix eine Teilnetz-Kennung (124) erzeugt,
- die Konfigurationsdatenverteilereinheit (102) im zugeordneten Teilnetz (103) Routeranzeige-Nachrichten (305) mit dem freigegebenen Teilnetz-spezifischen IPv6-Präfix (303) verbreitet,
- erste Kommunikationsgeräte (104) anhand des durch die Konfigurationsdatenverteilereinheit (102) verbreiteten IPv6-Präfix und anhand eines jeweiligen Schnittstellen-Identifikators jeweils für sich selbständig eine IPv6-Adresse erzeugen,
- zweite Kommunikationsgeräte (105) mittels einer zweiten Konfigurationsanforderung (302) jeweils eine Bereitstellung einer IPv6-Adresskonfiguration für sich anfordern,
- die Konfigurationsdatenverteilereinheit (102) die zweiten Konfigurationsanforderungen (302, 302') der zweiten Kommunikationsgeräte (105) jeweils unter Einfügung der Teilnetz-Kennung (124) an den Konfigurationsserver (101) weiterleitet,
- der Konfigurationsserver (101) anhand der Teilnetz-Kennung (124) auf die zweiten Konfigurationsanforderungen (302, 302') jeweils eine IPv6-Adresskonfiguration (304) mit einer IPv6-Adresse aus einem Teilnetz-spezifischen Adressbereich (307) an die zweiten Kommunikationsgeräte (105) bereitstellt.

2. Verfahren nach Anspruch 1,
bei dem die ersten Konfigurationsanforderungen (301) DHCPv6-Konfigurationsanforderungen mit IA_PD-Option für eine Präfix-Delegation sind.

3. Verfahren nach einem der Ansprüche 1 oder 2,
bei dem die zweiten Konfigurationsanforderungen (302, 302') DHCPv6-Konfigurationsanforderungen mit IA_NA-Option zur Bereitstellung einer nicht-temporären IPv6-Adresse oder mit IA_TA-Option zur Bereitstellung einer temporären IPv6-Adresse sind.

4. Verfahren nach einem der Ansprüche 1 bis 3,
bei dem der Konfigurationsserver (101) ein DHCPv6-Server ist und bei dem der Konfigurationsserver Informationen über an Kommunikationsgeräte vergebene IPv6-Adresskonfigurationen für eine Verwaltung von IPv6-Adresskonfigurationen speichert.

5. Verfahren nach einem der Ansprüche 1 bis 4,
bei dem eine Konfigurationssteuerungseinheit (113) dem Konfigurationsserver (101) ausgewählte IPv6-Präfixe (306) und/oder einen ausgewählten IPv6-Adressbereich (307) zur Zuteilung an zu konfigurierende Kommunikationsgeräte zuordnet.

6. Verfahren nach Anspruch 5,
bei dem die Konfigurationsteuerungseinheit (113) einen DHCPv6-Client (114) zur Abfrage von IPv6-Präfixen und/oder IPv6-Adressbereichen von einem übergeordneten DHCPv6-Server (100) umfasst.

7. Verfahren nach einem der Ansprüche 1 bis 6,
bei dem der Konfigurationsserver (101) eine Auswerteeinheit (111) umfasst, die jeweils anhand der Teilnetz-Kennung (124) einen zulässigen Adressbereich für den Konfigurationsserver (101) zur Bereitstellung der jeweiligen IPv6-Adresskonfiguration (304) auswählt.

8. Verfahren nach einem der Ansprüche 1 bis 7,
bei dem die Konfigurationsdatenverteilereinheit (102) bei ihrer Inbetriebnahme die Freigabe des Teilnetz-spezifischen IPv6-Präfix (303) vom Konfigurationsserver (101) anfordert.

9. Verfahren nach einem der Ansprüche 1 bis 8,
bei dem die Konfigurationsdatenverteilereinheit (102) die Teilnetz-Kennung (124) für die zweiten Konfigurationsanforderungen (302, 302') der zweiten Kommunikationsgeräte jeweils mittels OPTION_SUBSCRIBER_ID entsprechend IETF RFC 4580 an den Konfigurationsserver übermittelt.

10. Verfahren nach einem der Ansprüche 1 bis 9,
bei dem die Konfigurationsdatenverteilereinheit (102) die Routeranzeige-Nachrichten (305) im zugeordneten Teilnetz (103) mit aktivierter On-link-Option und mit deaktivierter Autoconfiguration-Option entsprechend IETF RFC 4861 verbreitet.

11. Konfigurationsdatenverteilereinheit zur Durchführung eines Verfahrens nach einem der Ansprüche 1 bis 10,
**dadurch gekennzeichnet, dass**
- die Konfigurationsdatenverteilereinheit Routerfunktionen umfasst dafür ausgestaltet und eingerichtet ist, mittels einer ersten Konfigurationsanforderung eine Freigabe eines Teilnetz-spezifischen IPv6-Präfix von einem Konfigurationsserver anzufordern und aus einem freigegebenen Teilnetz-spezifischen IPv6-Präfix eine Teilnetz-Kennung zu erzeugen,
- in einem zugeordneten Teilnetz Routeranzeige-Nachrichten mit dem freigegebenen Teilnetz-spezifischen IPv6-Präfix zu verbreiten,
- zweite Konfigurationsanforderungen zur Bereitstellung jeweils einer IPv6-Adresskonfiguration von anfordernden Kommunikationsgeräten jeweils unter Einfügung der Teilnetz-Kennung an den Konfigurationsserver weiterzuleiten.

12. Konfigurationsserver zur Durchführung eines Verfahrens nach einem der Ansprüche 1 bis 10,
**dadurch gekennzeichnet, dass**
- der Konfigurationsserver dafür ausgestaltet und eingerichtet ist, auf erste Konfigurationsanforderungen jeweils zumindest ein mittels Routeranzeige-Nachrichten verbreitbares IPv6-Präfix für ein zu konfigurierendes Kommunikationsgerät mit Routerfunktionen freizugeben,
- auf zweite Konfigurationsanforderungen jeweils eine IPv6-Adresskonfiguration an ein zu konfigurierendes Kommunikationsgerät bereitzustellen,
- anhand von in die zweiten Konfigurationsanforderungen eingefügten Teilnetz-Kennungen auf die zweiten Konfigurationsanforderungen jeweils eine IPv6-Adresskonfiguration mit einer IPv6-Adresse aus einem Teilnetz-spezifischen Adressbereich an die zu konfigurierenden Kommunikationsgeräte bereitzustellen.
